Europäisches Patentamt

European Patent Office

Office européen des brevets

(19)

(11) Numéro de publication: **0 227 532**
**B1**

(12) # FASCICULE DE BREVET EUROPEEN

(45) Date de publication du fascicule du brevet:
**09.05.90**

(51) Int. Cl.⁵: **G07F 7/02**, G07F 7/08

(21) Numéro de dépôt: **86402648.9**

(22) Date de dépôt: **28.11.86**

(54) Procédé de paiement électronique à l'aide d'une mémoire.

(30) Priorité: **02.12.85 FR 8517778**

(43) Date de publication de la demande:
**01.07.87 Bulletin 87/27**

(45) Mention de la délivrance du brevet:
**09.05.90 Bulletin 90/19**

(84) Etats contractants désignés:
**BE DE GB IT SE**

(56) Documents cités:
**EP-A- 0 159 539**
**FR-A- 2 386 080**
**FR-A- 2 403 597**
**FR-A- 2 503 423**

(73) Titulaire: **Remery, Patrick, 6 rue des Mauvis,
F-14000 Caen(FR)**
Titulaire: **Boule, Jean-Pierre, 12, rue de la Résistance,
F-14540 Soliers(FR)**

(72) Inventeur: **Remery, Patrick, 6 rue des Mauvis,
F-14000 Caen(FR)**
Inventeur: **Boule, Jean-Pierre, 12, rue de la Résistance,
F-14540 Soliers(FR)**

(74) Mandataire: **Mongrédien, André et al, c/o
BREVATOME 25, rue de Ponthieu, F-75008 Paris(FR)**

## Description

La présente invention a pour objet un procédé de paiement électronique à l'aide d'une mémoire.

Le fonctionnement actuel des systèmes de paiement électronique de petites sommes consiste en l'utilisation de cartes à mémoire dites "porte-jetons".

On sait que la carte à mémoire est un support plastique dont les dimensions sont conformes aux normes ISO 2894 et 3554. Sur ce support est implanté un composant électronique contenant un microprocesseur. Celui-ci contient une mémoire de données de plusieurs centaines de bits réalisée en technologie "EPROM". On sait qu'il s'agit là d'une mémoire à lecture seulement, programmable électriquement une fois (Electrically Programmable Read Only Memory).

Le traitement effectué dans la carte à mémoire "porte-jetons" consiste à faire correspondre à chaque bit d'une zone de la mémoire de données, une unité de paiement dite "jeton". Un terminal point de vente, muni d'un lecteur de cartes, exécute une transaction par "grillage" de bits dans la mémoire de données. Le "grillage" d'un bit consiste à faire passer électriquement un élément binaire de la mémoire de l'état binaire "1" correspondant au crédit d'une unité à l'état binaire "0" correspondant à un crédit nul. La mémoire de données étant réalisée en technologie "EPROM", ce changement d'état est électriquement irréversible.

Les défauts de ce système sont multiples : d'une part, il n'est pas possible de recharger la carte, et d'autre part, la consommation de bits est élevée : le nombre de bits grillés est en effet égal au nombre d'unités à débiter.

Le but de l'invention est de remédier à ces inconvénients. A cette fin, la mémoire est partagée en deux zones d'égale capacité. La structure physique et logique de la mémoire permet d'associer à chaque bit un rang. Deux bits sont dits homologues s'ils ont même rang dans les deux zones ; ils forment un couple noté $(x, y)$ où $x$ est la valeur binaire (0 ou 1) du bit de la première zone, dite "zone de paiement" et où $y$ est la valeur binaire du bit de la deuxième zone, dite "zone de rechargement". Selon l'invention le crédit disponible dans la carte s'exprime en unités, le nombre d'unités disponibles étant égal au nombre de couples $(1,1)$ dont le rang est à la fois supérieur à 1 ou au rang du couple $(0,1)$ de rang le plus élevé, si un tel couple $(0,1)$ existe, et inférieur au rang d'un couple limite déterminé.

Selon une première variante, ce couple déterminé limitant le nombre d'unités disponibles est le dernier couple $(1,1)$ de la mémoire. Autrement dit le crédit disponible est limité par la capacité de la mémoire.

Selon une deuxième variante le couple déterminé limitant le nombre d'unités disponibles est un couple butée $(1,0)$ obtenu en écrivant un 0 dans la zone de rechargement.

Enfin, selon une troisième variante le couple déterminé limitant le nombre d'unités disponibles est, parmi des couples butées $(1,0)$, celui qui a le rang le plus élevé.

Selon l'invention, pour effectuer une opération de débit de la carte de $p$ unités, on grille un bit et un seul dans la zone de paiement selon la procédure suivante :
- on recherche le couple $(0,1)$ de rang $r_0$ le plus élevé,
- on recherche le $p^{ième}$ couple $(1,1)$ de rang $r_p$ supérieur à $r_0$,
on grille le bit de rang $r_p$ en zone de paiement si ce rang est inférieur au rang du couple limite, lequel est défini selon l'une des trois variantes définies plus haut.

Pour effectuer une opération de crédit de la carte, on grille des bits dans la zone de rechargement pour annuler des opérations de débit antérieures et ceci en faisant passer les couples $(0,1)$ à l'état $(0,0)$, ces couples étant ignorés par la suite.

Pour limiter le crédit rechargé dans la carte, on peut faire passer un couple $(1,1)$ à l'état $(1,0)$ - couple butée - sans annuler ou en annulant les couples butées précédents, c'est-à-dire en faisant passer un couple butée $(1,0)$ à l'état $(0,0)$ ignoré par la suite. Si les couples butées ne sont pas utilisés, on peut limiter le crédit rechargé par un paiement fictif, en faisant passer un couple $(1,1)$ à l'état $(0,1)$.

Par rapport à l'art antérieur (porte-jetons), la consommation de bits se trouve réduite quand le paiement moyen dépasse deux unités. En effet, un paiement implique le grillage d'un bit en zone de paiement, et le réemploi des couples inutilisés implique le grillage du bit homologue en zone de rechargement, soit 2 bits au total.

En fait, lors du rechargement la limitation de la somme rechargée conduit à griller des bits supplémentaires. En pratique on peut considérer que le nombre de bits grillés par opération est compris entre 2 et 3.

Les caractéristiques de l'invention apparaîtront mieux après la description qui suit, d'un exemple de réalisation de l'invention. Cette description se réfère à des dessins annexés sur lesquels :

- la figure 1 illustre l'état initial de la mémoire ;
- la figure 2 illustre l'écriture d'une butée dans la zone de chargement ;
- la figure 3 illustre une opération de premier paiement ;
- la figure 4 illustre une opération de deuxième paiement ;
- la figure 5 montre l'état de la mémoire en fin de première utilisation ;
- la figure 6 illustre l'opération de détermination du montant à recharger dans une carte ;
- la figure 7 illustre l'opération de mise à $(0,0)$ des couples $(0,1)$ et $(1,0)$ lors du rechargement ;
- la figure 8 montre l'état de la mémoire après écriture d'une nouvelle butée $(1,0)$.

L'invention peut être mise en oeuvre avec un grand nombre de type de mémoires : des mémoires électroniques, par exemple EPROM ou EEPROM, avec transformation irréversible ou non, des mémoires magnétiques etc...

La mémoire utilisée peut être l'un des composants d'une carte, genre carte de crédit, où être l'un des composants d'un circuit électronique plus complexe.

Quant aux bits d'information contenus dans cette mémoire, il est clair que la désignation par 1 ou 0 de ces bits n'a pas de valeur limitative : il s'agit simplement d'une notation permettant de caractériser un premier état logique et un second état logique.

Dans la description qui suit on se référera au cas où la mémoire est du type électronique EPROM, mémoire qui permet de griller irréversiblement des bits de l'état 1 à l'état 0. Mais cet exemple n'est pas limitatif.

Dans la description qui suit on se placera également dans la variante où le crédit disponible est limité par un couple butée (1,0) et un seul.

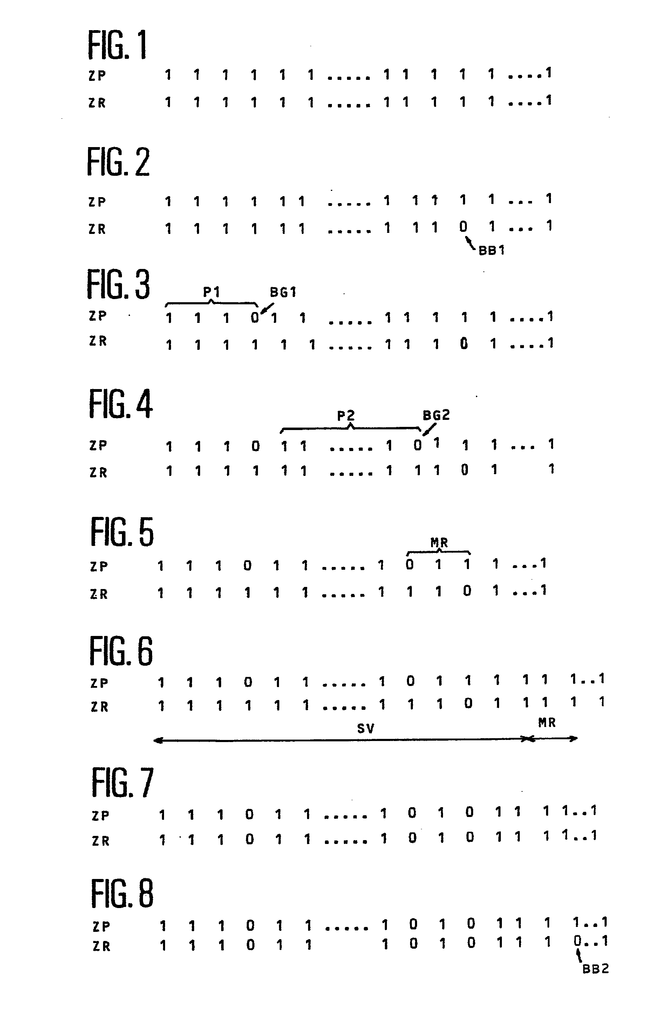

L'état initial de la mémoire avec ses zones de paiement ZP et de rechargement ZR est représenté sur la figure 1. Tous les bits sont à 1. Un bit à 0 dans la zone de rechargement ZR définit une butée BB1 comme représenté sur la figure 2.

Une première transaction d'un montant P1 est effectuée par un terminal point de vente dans lequel est introduite la carte, en comptant, depuis le début de la zone ZP, un nombre de 1 égal à P1 (ici P1=4). Ce comptage définit le bit à griller BG1. Ce bit est mis à 0 (figure 3).

Une deuxième transaction correspondant à un paiement d'un montant P2 est obtenue en grillant le bit BG2 situé à P2 emplacements de BG1 (figure 4).

Ces paiements sont possibles puisque le rang du bit mis à 0 est inférieur au rang de la butée BB1. Mais la transaction est impossible dès que le rang $r_p$ du bit que l'on devrait griller est supérieur au rang du couple de butée.

Dans la pratique, la zone de rechargement est protégée. Lorsque la carte est introduite dans un terminal point de vente, celui-ci n'a accès qu'à la zone de paiement ZP au moyen d'une première clé et ne peut griller que les bits de cette zone. Seul l'organisme émetteur de la carte est habilité à griller des bits dans la zone de rechargement ZR. Ces opérations de rechargement s'effectuent donc en introduisant la carte dans un terminal spécial, qui est un terminal de chargement. Cette protection est obtenue par l'utilisation d'une clé connue du seul terminal de rechargement. Ce terminal calcule d'abord le montant résiduel MR de la carte. C'est le nombre de couples (1, 1) qui subsiste entre le dernier couple (0, 1) et le couple définissant la butée (1, 0). (Figure 5). Puis il calcule le nouveau montant à recharger : c'est la somme du montant résiduel MR et de la somme versée SV par le titulaire de la carte. Le terminal cherche ensuite le bit de butée à griller. Pour cela, il compte, depuis le début des zones, un nombre de couples (1, 1) égal au montant à recharger SV+MR (figure 6). Les couples à l'état (1, 0), (0, 1) et (0, 0) sont ignorés dans ce comptage. Si le nombre de couples à l'état (1, 1) est inférieur au montant à recharger, plus 1, l'opération est impossible.

Le rechargement précédent est remis à zéro en faisant passer tous les couples (1, 0) et (0, 1) à l'état (0, 0) (figure 7). Ces couples (0, 0) seront ensuite ignorés dans toutes les opérations ultérieures. Finalement, le terminal grille le bit BB2 qui définit la nouvelle butée (figure 8).

A titre d'exemple, on peut utiliser des mémoires de 50 mots de 32 bits, dont 28 sont utiles (4 bits sont réservés pour le système d'exploitation de la carte). Les tailles des zones de paiement et de rechargement sont donc de 50×14=700 bits. Le nombre de bits grillés par paiement étant de 1, le nombre théorique de paiements est de 700. En fait, il est inférieur à ce nombre car les bits grillés pour définir des butées et les bits restant en fin de validité de la carte, sont perdus. De façon plus précise, on peut prendre l'exemple d'un rechargement constant minimum de 100 unités et de paiements moyens de 10 unités. Les bits inutilisables car leur nombre ne permet pas un rechargement sont donc au nombre de 100. On ne peut donc effectuer que 545 paiements. D'où une consommation moyenne de 2,56 bits par opération. Le montant global de ces paiements s'élève ainsi à 545×10=5450 unités.

Si l'on veut améliorer la précision des paiements en multipliant par 2 le nombre de bits comptés par paiement, soit 20 unités, les rechargements seront de 200 unités. Le nombre de paiements sera alors de 455 d'où une consommation moyenne de 3,07 bits par opération. Le montant global des paiements sera de 455×20=9100 unités.

En conséquence, la précision sur les unités est doublée au détriment du nombre total de paiements diminué de 20%.

L'invention apporte des protections spécifiques vis-à-vis des agressions possibles de la part d'un porteur de carte essayant de masquer des paiements ou de faire des rechargements illicites. A cet égard, les points suivants doivent être soulignés :
- la lecture des zones de paiement et de rechargement est libre,
- l'écriture de 0 dans la zone de chargement n'est possible que sous présentation d'une clé : tout passage des couples à l'état (1, 1) et (0,1) à l'état (1,0) ou (0,0) est impossible sans présenter à la carte une clé détenue par l'organisme émetteur et lui seul,
- l'écriture de 0 en zone de paiement a pour conséquence, pour le couple (1,1) qui passe à (0,1) :
- d'être sans effet sur le montant disponible dans la carte, si elle est faite sur des couples précédant le dernier couple à l'état (0,1) ou situés après le couple butée à l'état (1,0),
- d'ajouter des paiements fictifs dans la carte si elle est faite sur des couples situés entre le dernier couple l'état (0,1) et le couple butée à l'état (1,0).

Pour le couple butée à l'état (1,0), le passage à l'état (0,0) aura pour conséquence de rendre invalide la carte car au prochain paiement, plus aucune butée n'apparaîtra.

En conséquence, une écriture indue en zone de paiement ne peut jamais avoir pour conséquence la création de monnaie ; la carte ne peut être créditée que par des écritures en zone de rechargement sous contrôle de la clé de l'organisme émetteur.

**Revendications**

1. Procédé de paiement électronique utilisant une mémoire contenant à l'origine des bits ayant tous un premier état logique, ci-après désigné 1, ces bits pouvant être modifiés pour les faire passer dans un autre état logique, ci-après désigné 0, ce procédé étant caractérisé par le fait que :

- la mémoire est divisée en deux zones d'égales capacités, une première zone dite zone de paiement et une seconde zone dite zone de rechargement, les bits ayant, dans ces deux zones, un rang déterminé, un bit de valeur x dans la première zone étant dit homologue d'un bit de valeur y dans la seconde zone, s'ils ont même rang, ces deux bits définissant alors un couple (x, y), des couples (1,1), (1,0), (0,1) et (0,0) pouvant être ainsi écrits dans la mémoire,
- le crédit disponible dans la carte s'exprime en unités, le nombre d'unités disponibles étant égal au nombre de couples (1,1) dont le rang est supérieur à 1 ou au rang du couple (0,1) de rang le plus élevé, lorsqu'un tel couple (0,1) existe, et inférieur au rang d'un couple limite déterminé.

2. Procédé selon la revendication 1, caractérisé par le fait que la mémoire utilisée est une mémoire électronique.

3. Procédé selon la revendication 2, caractérisé par le fait que la mémoire électronique est une mémoire EPROM ou EEPROM.

4. Procédé selon la revendication 1, caractérisé par le fait que le couple limite déterminé limitant le nombre d'unités disponibles est le dernier couple (1,1) de la mémoire.

5. Procédé selon la revendication 1, caractérisé par le fait que le couple déterminé limitant le nombre d'unités disponibles est un couple butée (1,0) obtenu en écrivant un 0 dans la zone de rechargement.

6. Procédé selon la revendication 1, caractérisé par le fait que le couple déterminé limitant le nombre d'unités disponibles est, parmi des couples butées (1,0), celui qui a le rang le plus élevé.

7. Procédé selon les revendications 1 à 6, caractérisé par le fait que, pour effectuer une opération de débit de la carte de p unités, on grille un bit et un seul dans la zone de paiement selon la procédure suivante :

- on recherche le couple (0,1) de rang $r_0$ le plus élevé,
- on recherche le $p^{ième}$ couple (1,1) de rang $r_p$ supérieur à $r_0$,
- on grille le bit de rang $r_p$ en zone de paiement si ce rang est inférieur au rang du couple limite, sinon l'opération est impossible.

8. Procédé selon la revendication 1, caractérisé par le fait qu'on effectue une opération de crédit de la carte en grillant des bits dans la zone de rechargement pour annuler des opérations de débit antérieures et ceci en faisant passer les couples (0,1) à l'état (0,0), ces couples étant ignorés par la suite.

9. Procédé selon la revendication 7 quand elle est combinée avec le revendication 4 et selon la revendication 8, caractérisé par le fait que, lors d'une opération de crédit de la carte, le montant du crédit est ajusté en faisant passer un couple (1,1) à l'état (0,1) (paiement fictif).

10. Procédé selon la revendication 7 quand elle est combinée avec les revendications 5 et 6 et selon la revendication 8, caractérisé par le fait que, lors d'une opération de crédit de la carte, le montant du crédit est ajusté en faisant passer un couple (1,1) à l'état (1,0) pour créer un couple butée.

11. Procédé selon la revendication 10, caractérisé par le fait que l'on annule un couple butée (1,0) précédent en grillant le bit à 1 de la zone de paiement pour faire passer le couple (1,0) à l'état (0,0), ce couple étant ignoré par la suite.

12. Procédé selon la revendication 1, caractérisé par le fait que l'écriture en zone de paiement est effectuée dans des automates de paiement acceptant la carte, et n'est possible que sur présentation d'une première clé connue par tous ces automates de paiement.

13. Procédé selon la revendication 1, caractérisé par le fait que l'écriture en zone de rechargement est effectuée dans un automate de rechargement sous contrôle de l'organisme délivrant la carte et n'est possible que sur présentation d'une seconde clé connue par les automates de rechargement agréés par cet organisme.

## Claims

1. Electronic payment process using a memory initially containing bits all having a first logic state, hereinafter designated 1, whereby said bits can be modified to pass them into another logic state, hereinafter disignated 0, said process being characterized in that the memory is subdivided into two equal capacity zones, namely a first zone called the payment zone and a second zone called the reloading zone, the bits having in said two zones a predetermined rank, a bit of value x in the first zone being homologous to a bit of value y in the second zone if they have the same rank, said two bits then defining a pair (x, y), whereby pairs (1,1), (1,0), (0,1) and (0,0) can thus be written into the memory; the credit available in the card is expressed in units, the number of available units being equal to the number of pairs, (1,1) whose rank exceeds 1 or the rank of the highest rank pair (0,1), when such a pair (0,1) exists and below the rank of a predetermined limit pair.

2. Process according to claim 1, characterized in that the memory used is an electronic memory.

3. Process according to claim 2, characterized in that the electronic memory is an EPROM or EEPROM.

4. Process according to claim 1, characterized in that the predetermined limit pairs limiting the number of units available is the final pair (1,1) of the memory.

5. Process according to claim 1, characterized in that the predetermined pair limiting the number of units available is a stop pair (1,0) obtained by entering a 0 into the reloading zone.

6. Process according to claim 1, characterized in that the predetermined pair limiting the number of available units is, among the stop pairs (1,0) that which has the highest rank.

7. Process according to claims 1 to 6, characterized in that, for performing an operation of debiting the card by p units, a single bit is laced into the payment zone according to the following procedure: the pair (0,1) of the highest rank $r_0$ is sought, the pth pair (1,1) of rank $r_p$ exceeding $r_0$ is sought, the bit of

rank $r_p$ is laced into the payment zone if said rank is below the rank of the limit pair, otherwise the operation is impossible.

8. Process according to claim 1, characterized in that an operation of credit the card is carried out by lacing bits into the reloading zone in order to cancel out the preceding debiting operations by passing the pairs (0,1) to state (0,0), said pairs being subsequently ignored.

9. Process according to claim 7 when combined with claim 4 and according to claim 8, characterized in that during a card crediting operation, the amount of the credit is adjusted by passing a pair (1,1) to state (0,1) (fictional payment).

10. Process according to claim 7 when combined with claims 5 and 6 and according to claim 8, characterized in that during a card crediting operation, the amount of the credit is adjusted by passing a pair (1,1) to state (1,0) for producing a stop pair.

11. Process according to claim 10, characterized in that a preceding stop pair (1,0) is cancelled out by lacing the bit at 1 of the payment zone to pass the pair (1,0) to state (0,0), said pair being subsequently ignored.

12. Process according to claim 1, characterized in that the entry in the payment zone is carried out in the card-accepting payment machines and is only possible by presenting a first code known by all the payment machines.

13. Process according to claim 1, characterized in that the entry into the reloading zone is performed in a reloading machine under the control of the organisation issuing the card and is only possible on presenting a second code known by reloading machines authorised by said organisation.

## Patentansprüche

1. Verfahren zum elektronischen Bezahlen mittels eines Speichers, der anfänglich Bits enthält, die alle einen ersten logischen Zustand, hiernach 1 bezeichnet, besitzen, wobei diese Bits verändert werden können, um sie in einen anderen logischen Zustand, hiernach 0 bezeichnet, zu bringen, wobei das Verfahren gekennzeichnet ist durch die Tatsache, daß
– der Speicher in zwei Bereiche gleicher Kapazität aufgeteilt ist, wobei ein erster Bereich Bezahlbereich und ein zweiter Bereich Auffüllbereich genannt wird, wobei die Bits in diesen beiden Bereichen einen vorbestimmten Rang haben, wobei ein Bit mit dem Wert x im ersten Bereich ein Homolog eines Bits mit dem Wert y im zweiten Bereich genannt wird, wenn sie den gleichen Rang besitzen, wobei diese beiden Bits folglich ein Paar (x, y) von Paaren (1,1), (1,0), (0,1) und (0,0) bezeichnet, die so in den Speicher eingeschrieben werden können, und daß
– der auf der Karte zur Verfügung stehende Kreditrahmen in Einheiten ausgedrückt wird, wobei die Anzahl der zur Verfügung stehenden Einheiten gleich ist der Zahl der Paare (1,1), deren Rang höher ist als 1 oder als der Rang des Paares (0,1) mit dem höchsten Rang, falls ein solches Paar (0,1) existiert, und niedriger ist als der Rang eines bestimmten Grenzpaares.

2. Verfahren nach Anspruch 1, gekennzeichnet durch die Tatsache, daß der verwendete Speicher ein elektronischer Speicher ist.

3. Verfahren nach Anspruch 2, gekennzeichnet durch die Tatsache, daß der elektronische Speicher ein EPROM oder ein EEPROM ist.

4. Verfahren nach Anspruch 1, gekennzeichnet, daß durch die Tatsache, daß das bestimmte Grenzpaar, das die Anzahl der zur Verfügung stehenden Einheiten begrenzt, das letzte Paar (1,1) des Speichers ist.

5. Verfahren nach Anspruch 1, gekennzeichnet durch die Tatsache, daß das bestimmte Grenzpaar, das die Anzahl der zur Verfügung stehenden Einheiten begrenzt, ein Stoppaar (1,0) ist, das man erhält, wenn man eine 0 in den Auffüllbereich schreibt.

6. Verfahren nach Anspruch 1, gekennzeichnet durch die Tatsache, daß das bestimmte Grenzpaar, das die Anzahl der zur Verfügung stehenden Einheiten begrenzt, jenes ist, das unter den Stoppaaren (0,1) den höchsten Rang hat.

7. Verfahren nach Anspruch 1 bis 6, gekennzeichnet durch die Tatsache, daß man zum Ausführen einer Belastungsoperation der Karte von p Einheiten ein einziges Bit nach dem folgenden Verfahren in dem Bezahlbereich löscht:
– man such das Paar (0,1) mit dem höchsten Rang $r_o$,
– man such das p-te Paar (1,1) mit dem Rang $r_p$ höher als $r_o$,
– man löscht das Bit mit dem Rang $r_p$ in den Bezahlbereich, wenn dieser Rang niedriger ist als der Rang des Grenzpaares, falls nicht, ist die Operation unmöglich.

8. Verfahren nach Anspruch 1, gekennzeichnet durch die Tatsache, daß man eine Gutschriftoperation der Karte durchführt, indem man Bits in den Auffüllbereich prägt, um vorhergehende Belastungsoperationen zu annullieren, und dies geschieht, indem man die Paare (0,1) in den Zustand (0,0) umwandelt, wobei diese Paare in der Folge nicht beachtet werden.

9. Verfahren nach Anspruch 7, wenn er mit Anspruch 4 verbunden ist, und nach Anspruch 8, gekennzeichnet durch die Tatsache, daß der Kreditbetrag während einer Gutschriftoperation angepaßt wird, indem man ein Paar (1,1) in den Zustand (0,1) umwandelt (fiktive Bezahlung).

10. Verfahren nach Anspruch 7, wenn er mit den Ansprüchen 5 und 6 verbunden ist, und nach Anspruch 8, gekennzeichnet, durch die Tatsache, daß der Kreditbetrag während einer Gutschriftoperation angepaßt wird, indem man ein Paar (1,1) in den Zustand (1,0) umwandelt, um ein Stoppaar zu erzeugen.

11. Verfahren nach Anspruch 1 bis 10, gekennzeichnet durch die Tatsache, daß man ein vorhergehendes Stoppaar (1,0) annulliert, indem man das Bit bei 1 des Bezahlbereichs löscht, um das Paar (1,0) in den Zustand (0,0) umzuwandeln, wobei dieses Paar in der Folge ignoriert wird.

12. Verfahren nach Anspruch 1, gekennzeichnet durch die Tatsache, daß das Beschreiben in den Bezahlbereich in Zahlautomaten durchgeführt wird, die die Karte akzeptieren, und nur möglich ist, wenn ein erster Schlüssel, der allen diesen Zahlautomaten bekannt ist, präsentiert wird.

13. Verfahren nach Anspruch 1, gekennzeichnet durch die Tatsache, daß das Beschreiben in den Auffüllbereich in einen Auffüllautomaten durchgeführt wird, der der Kontrolle der Organisation, die die Karte ausgibt, untersteht, und nur möglich ist, wenn ein zweiter Schlüssel, der den von dieser Organisation anerkannten Auffüllautomaten bekannt ist, präsentiert wird.

# FIG. 1

```
ZP     1  1  1  1  1  1 .....11  1  1  1 ....1

ZR     1  1  1  1  1  1 .....11  1  1  1 ....1
```

# FIG. 2

```
ZP     1  1  1  1  1 1  ..... 1  1 1  1  1 ... 1

ZR     1  1  1  1  1 1  ..... 1  1 1  0  1 ... 1
                                        ↖BB1
```

# FIG. 3

```
         ┌──P1──┐   BG1
ZP     1  1  1  0 ↗1  1   ..... 1 1  1  1  1 ....1

ZR     1  1  1  1  1  1   ..... 1 1  1  0  1 ....1
```

# FIG. 4

```
                    ┌────P2────┐   BG2
ZP     1  1  1  0  1 1  ..... 1  0 ↗1  1  1 ... 1

ZR     1  1  1  1  1 1  ..... 1  1 1  0  1     1
```

# FIG. 5

```
                              ┌─MR─┐
ZP     1  1  1  0  1  1 ..... 1  0  1  1  1 ...1

ZR     1  1  1  1  1  1 ..... 1  1  1  0  1 ...1
```

# FIG. 6

```
ZP     1  1  1  0  1  1 ..... 1  0  1  1  1  1 1  1..1

ZR     1  1  1  1  1  1 ..... 1  1  1  0  1  1 1  1  1
```
```
←─────────────────── SV ───────────────────→⟨ MR
```

# FIG. 7

```
ZP     1  1  1  0  1  1 ..... 1  0  1  0  1 1  1 1..1

ZR     1  1  1  0  1  1 ..... 1  0  1  0  1 1  1 1..1
```

# FIG. 8

```
ZP     1  1  1  0  1  1 ..... 1  0  1  0  1 1  1  1..1

ZR     1  1  1  0  1 1        1  0  1  0  1 1  1  0..1
                                                  ↖BB2
```